# EUROPEAN PATENT SPECIFICATION

(11) **EP 2 097 309 B1**
(45) Date of publication and mention of the grant of the patent: **29.08.2012**
(21) Application number: 07846447.6
(22) Date of filing: 13.12.2007
(51) Int. Cl.: B62J 6/06, H02K 1/17, H02K 1/27

(54) **BICYCLE GENERATOR**
FAHRRADGENERATOR
DYNAMO DE BICYCLETTE

(30) Priority: 13.12.2006 DK 200601638
(43) Date of publication of application: 09.09.2009
(73) Proprietor: Reelight APS, 8260 Viby J (DK)
(72) Inventor: PEDERSEN, Troels, 2990 Nivå (DK)
(74) Representative: Plougmann & Vingtoft A/S
(86) International application number: PCT/DK2007/050185
(87) International publication number: WO 2008/071198

(56) References cited:
- DE-A1- 3 208 720
- DE-U1- 9 110 953
- DE-U1- 29 816 561
- US-A1- 2003 071 537

## Description

### FIELD OF THE INVENTION

The present invention relates to bicycle generator systems.

### BACKGROUND OF THE INVENTION

Generation of electric power for light on bicycles is today achieved by means of various types of generators. It is well known to generate current on bicycles by using a generator that is driven by the bicycle. Specific examples of this are seen in the tyre generators which were previously very common. It is also known from modern wheel hub generators which are integrated as the hub of the front wheel.

The tyre generator is known for its great simplicity, making it possible to generate 3 Watts at 15 km/h by using a small rotating magnetic armature. Rotation of the magnetic armature is caused by a roller being mounted at the end of a shaft on the magnetic armature, said roller bring pressed against the tyre via a spring and thereby rotated when the bicycle is running. As the roller diameter is much smaller than that of the bicycle wheel, the transmission ratio is between 10:1 and 20: 1. Surrounding the magnetic armature is a number of plate elements which alternately pick up/detect "north pole" and "south pole" which are conducted through a coil core. As the gearing between wheel and roller is relatively high and the magnet often has eight poles (four south poles and four north poles), the energisation frequency will become relatively high - as high as 240 Hz at 15 km/h. At this high energisation frequency - which is necessary in order to obtain 3 Watts using a small magnet and a small coil - the loss in connection with repeated energisation is also quite significant. The efficiency obtained from this type of generators is often no more than 30%, which means that the cyclist must produce as much as 10 Watts in order to achieve the 3 Watts. Therefore, the tyre generator has also had the reputation of being "heavy" to drive.

The hub generator is a different solution as it is integrated in the front wheel hub and thus runs without gearing in relation to the front wheel hub. Despite having up to 24 poles (12 south poles and 12 north poles) on the magnet energising the coil, the energisation frequency is still far below that known from the tyre generator, typically 25-30 Hz at 15 km/h, and the magnetic loss is therefore often much smaller. It is therefore possible to find hub generators having efficiencies of approximately 50%-60%. The drawback of this kind of generators is that large magnets and large iron cores, as well as coils, are needed to produce the 3 Watts at common speeds. This results in a heavy and expensive solution.

A third concept also exists in which the generator, via two gearings (two timing belt gearings), drives the generator in a tyre generator, the two steps of the gearing representing the same gearing as the roller against the tyre. However, here the efficiency is much more impressive than for the traditional tyre generator.

Although these generator types provide the necessary power for the bicycle equipment they often are experienced as presenting either a significant driving resistance for the bicycle rider or being heavy.

US 6,011,337 discloses a double-sided, non-iron core, brushless, axial magnetic field permanent-magnet type DC motor which includes a shaft, two electromagnet units parallelly mounted on the shaft, and a permanent magnet unit mounted on the shaft between the electromagnet units and having its direction of magnetization disposed in parallel to the shaft. The permanent magnet unit is allowed to rotate relatively around the electromagnet units by being forced by magnetic repulsion force from both sides.

US 2003/071537 discloses a magnet motor provided with a wireless coil rotator, which the upper part has been constructed with an equal angle and a power perpetual magnet. At least one set of a magnet pole coil is formed into an electromagnet pole module and a circuit control unit. Using the perpetual magnet and the less electricity consumption of an electric magnet pole and generation of repelling torque, accomplishes the object of the turning rotator to generate power. The motor can apply to be the driven motor of a bicycle, a motorcycle and a car.

Whereas US 6,011,337 and US 2003/071537 relate to induction motors, there is still a need for improving generators for bicycles.

The objective of the present invention aims towards reducing the power needed as input to the bicycle generator for generating a sufficient electrical power for supplying the relevant bicycle equipment, while at the same time maintaining a possibility of keeping the weight of the generator low.

### SUMMARY OF THE INVENTION

The objective of the present invention is achieved through a bicycle generator, the generator comprising a shaft carrying a first disc and a second disc characterised in that the generator further comprises, at least one magnet mounted on the first disc adapted to rotate together with the shaft, a coil with a core of non-magnetic conducting material, where the second disc enables a magnetic field flow through the coil core from the at least one magnet on the first disc to the second disc, and where the coil is provided between the first and the second disc.

The present invention relates to the construction of a generator for bicycles, said generator using a coil that does not contain iron or any magnetically conducting material.

By providing a generator that include a non-magnetic conducting material as core for the generator coil the load (i.e. the work needed for rotating the generator) during periods without electric load (e.g. when the light is switched off) will be significantly reduced without directly deactivating the generator and during load drive (e.g. when the light is switched on) the efficiency of the generator is significantly higher than traditional iron-core generators, meaning that less power input is needed from the cyclist and hence the propulsion of the bicycle during generator load is less cumbersome.

The non-magnetic material may comprise ambient air, plastic materials or other non-magnetic materials.

The invention distinguishes itself by making it possible to maintain the high frequency of shifts in magnetic fields through the coil without - as it is usual - any major loss of energy in iron that is energised repeatedly.

Preferred embodiments comprise a bicycle generator according to the invention, where the coil is provided between sets of magnets.

Another embodiment comprises four magnets or sets of magnets are provided in a manner distributed evenly around the shaft axis.

In one embodiment the coil is wound over the shaft of the rotor. In another embodiment a coil is provided for each magnet or set of magnets.

Preferable a housing is provided. The magnets are preferably mounted on radial extensions of a shaft mounted in said housing to allow rotation of the shaft in relation to the housing. The radial extension may be a plate member where the magnets are mounted on said plate member.

As a preferred embodiment it is foreseen that the core of the coil or coils is/are constituted by parts of the housing.

Preferably a frequency transformer is provided in connection with the output of the generator. Preferably the frequency transformer is a switch mode converter. This may provide for a stable, efficient and reliable power supply to the bicycle equipment.

As a further aspect of the invention a bicycle comprising a generator according to the invention is foreseen. This especially is relevant since such equipment may likely be an integral part of a bicycle. In an embodiment a transmission is provided between a rotating part of the bicycle and the generator shaft for increasing the generator rotational speed.

In summary, the invention relates to a bicycle induction generator. The generator includes a number of permanent magnets and a number of coils. The magnets are mounted on a rotating part of the generator which is driven via a transmission connected to a rotating part of the bicycle, for example the rotating part of the generator may be connected via a gear or belts to a hub of a wheel or via a roller interacting with the tire by friction. The core of the coils does not contain magnetic conducting material and, therefore, magnetic losses are avoided at high rotation speed of the coil.

### BRIEF DESCRIPTION OF THE FIGURES

Embodiments of the invention will be described, by way of example only, with reference to the drawings, in which;
FIG. 1A-B show an embodiment with two sets of magnets
FIG. 2 A-B show an embodiment with two magnets
FIG. 3A-B show an embodiment with four sets of magnets
FIG. 4A shows schematically a switch mode converter for the generator
FIG. 4B shows schematically an output signal from switch mode converter
FIG. 5 shows schematically a bicycle with a generator according to the invention.
FIG. 6 shows the efficiency of the generator according to the invention compared to a traditional generator.

### DESCRIPTION OF EMBODIMENTS

The present invention solves the problem of high losses in the core iron of the coil at high energisation frequencies. By ensuring that all permanent magnets and all iron being energised do not have any relative movement (change of magnetic field in iron or magnets), but only or primarily energise air in the coil core, the efficiency of the generator will be determined entirely by the electrical efficiency and any friction in the actual generator bearings or any gearing in front of the generator.

In one embodiment of the generator four magnets 2,3 are disposed in pairs opposite each other on two rotating plates (rotating synchronously) and alternately energising the coil 7 core (which e.g. may be air or plastic).

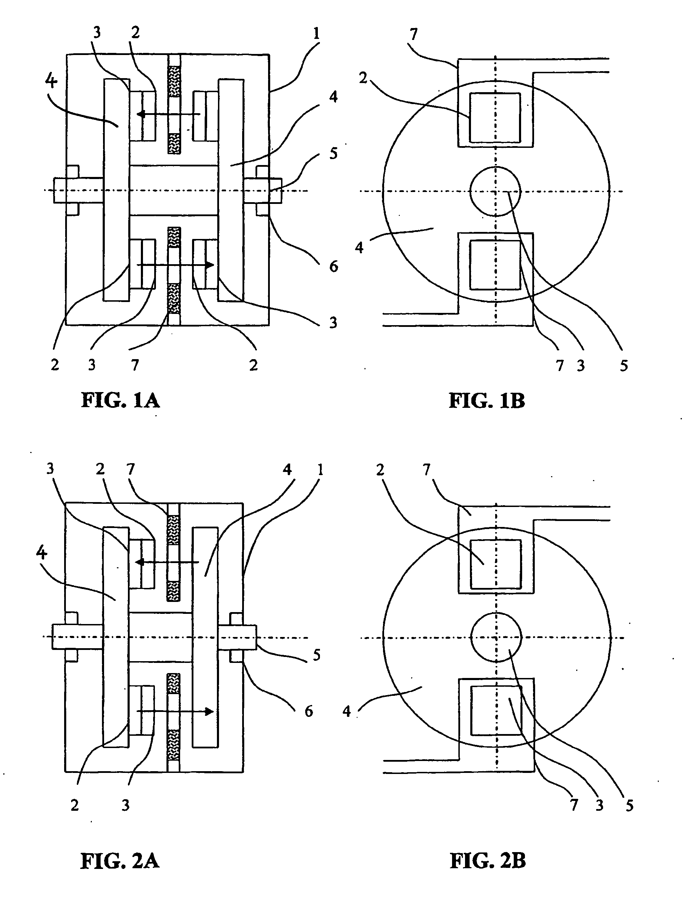

In another embodiment magnets are only mounted on one of the two discs, the disc without magnets serving as the conductor of the energisation, which means that the magnetic field can flow through the coil core from magnets on one disc to the second disc. This is illustrated in FIG 2.

FIG. 1A-B illustrate an embodiment in which two parallel magnetic conductive discs 4 or anchors are used to rotate the magnets 2,3. The shaft 5 carries the discs and is rotateable in bearings 6 located in a housing 7. These discs can also be made of a non-conductive material, but then the effect will be smaller. On each disc two magnets are mounted pole reversed as illustrated, so that the field moves in one direction for two opposite magnets 2,3 and in the other direction for the other two magnets.

In between magnets is air, or coil core material, which is not magnetically conductive. Surrounding this core material a coil is wound, as indicated in FIG. 1, with windings shown to surround the two sets of magnets.

When the magnets are rotated by rotation of the discs, the magnetic field direction through the coil will shift for passage of each set of magnets. This induces current into the coil, which may be withdrawn for the purpose of driving a LED or a light bulb.

The two discs may be formed as one piece, or in several pieces having being joined.

FIG. 2A-B illustrates another embodiment in which the magnets 2,3 on one rotating disc 4 have been removed. The system will still work because of the two shown magnets being pole reversed, and the magnetic field will move through the coil core via the magnetically conductive disc 4.

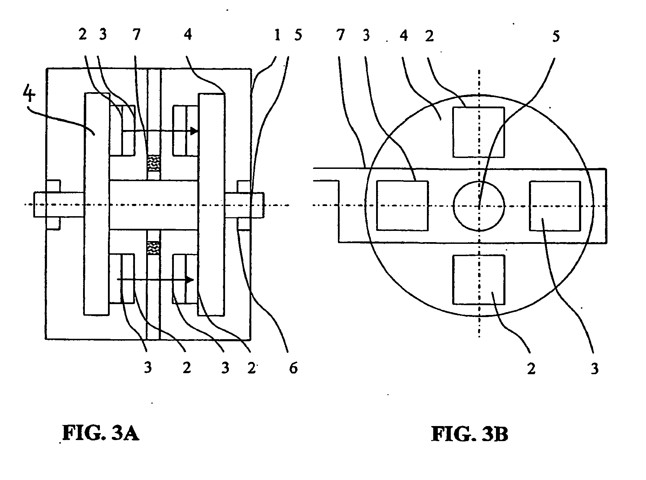

FIG. 3A-B illustrates an embodiment including four sets of magnets 2,3 being disposed alternately north/south on the two rotating discs 4. This embodiment includes only one single coil being wound in the gap between the rotating discs magnets and surrounding the rotational axis of the shaft 5. It may be contemplated not to use single permanent magnets as illustrated in FIG. 1 and FIG. 3, but magnetic discs or plates being energised in sections.

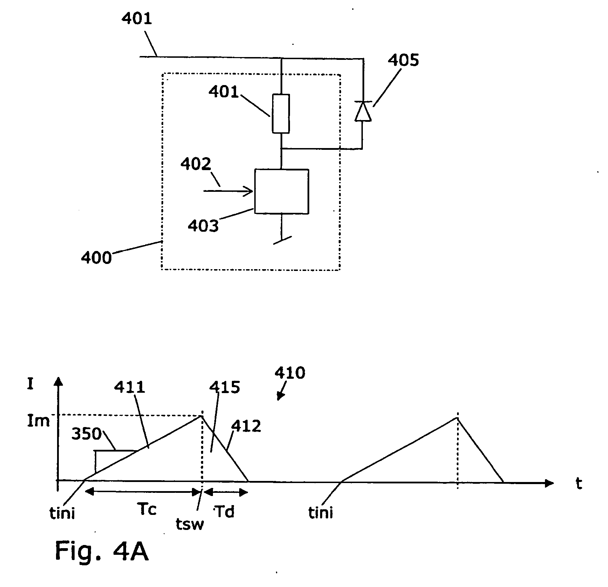

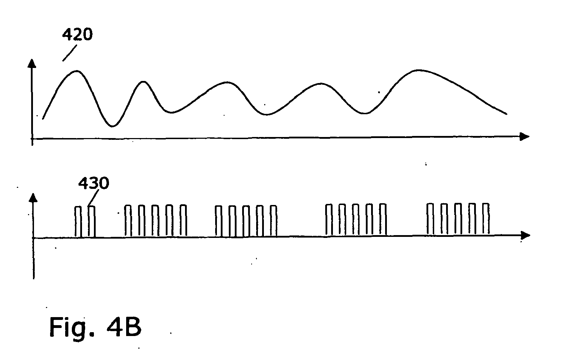

In FIG. 4 an example of a frequency converter in the form of a switch mode converter is illustrated. The voltage output from the bicycle generator varies in dependence of the rotation speed of the generator and is therefore dependent on the speed of the bicycle. Thus, if the speed of the bicycle is too low the voltage may be too small to produce a sufficient high intensity of light. Also, if the speed of the bicycle is too high the voltage may be so high that the light source is destroyed. Additionally, the frequency of the power output from the generator varies in dependence of the generator speed. If the frequency is too low this may cause undesirable flashing of the light and/or low light intensity; and if the frequency becomes too high, this may degrade the efficiency of the light emitter.

In order to avoid these disadvantages of varying generator voltage and/or frequency of the generator output, an electricconverter may be used for conditioning/conversion of the generator power output into a power signal which is more suitable for powering a bicycle load, e.g. a bicycle light.

One such electric converter may be a frequency converter capable of changing the varying generator frequency to a constant frequency of the converter output. Additionally, the frequency converter may be capable of amplifying and/or damping the generator voltage, so that a power output from the converter has a constant voltage.

Alternatively, the converter may be a voltage regulator capable of amplifying and/or damping the voltage of the power output from the generator. The voltage regulator may be designed as a transistor amplifying/damping circuit.

Fig. 4A shows a principal sketch of another converter known as a switching converter, or switch-mode converter 400. The switching converter comprises a switching storage element 401, which in this example is an inductor, and a switching element 403, for example a transistor or a FET. When the switching element is open, current flows from via connector 406, through the inductor 401 so that magnetic energy is stored in the inductor. The connector 406 may be connected directly to the generator, so that current flows directly from the generator to the connection 406. Alternatively, an electric circuit may be located between the generator output and the connector 406. Such electric circuit may be able to store electric energy from the generator, in order to deliver electric energy to the switching converter 400 during periods where the generator does not produce electric energy or produces insufficient energy to power the light 405. The electric circuit may also be a rectifying circuit, such as a diode or a diode bridge.

The diagram 410 in Fig. 4A is a principal sketch showing the amplitude I of currents 411 and 412 flowing in and out of the inductor 401 as a function of time, t. At point tini, the switching element 403 is opened and a charging current 411 starts flowing through the inductor 401, as shown in the diagram 310. At some point tsw, after a charging period Tc, the switching element 403 is closed, whereby the stored magnetic energy generates a discharging current 412. The discharging current 412 flows through the light source 405, during a discharging time Td, so that a light pulse is generated in response to the stored induction energy. Thus, the amount of energy 416 stored during charging period can be adjusted by adjusting the charging period. The amount of energy 415 discharged is almost equal to the stored energy 416. Thus, by adjusting the charging time Tc, it is possible to ensure the discharging energy 415 is almost constant, independent of the voltage of the generator output. That is, if the generator voltage is low, the charging slope 417 is relatively low and, therefore, the charging time Tc should be increased to ensure that the charging current reaches the predetermined threshold Im so as to achieve a constant charging energy 416 and discharging energy 415.

Fig. 4B shows an example of the output 430 from the switching converter. Power signal 420 is an example of the voltage signal outputted from the generator. Thus, the switching converter 400 converts the generator signal 420 into power pulses 420 which are supplied to the light 405. As seen from Fig. 4B, the voltage amplitudes of the power pulses are equal. Accordingly, the light 405 can be powered efficiently since the voltage amplitude of the power pulses is independent of the generator voltage and since the voltage amplitude can be adjusted to the most efficient voltage by adjusting the charging time Tc. Also, the frequency of power pulses 420 can be adjusted independent of the frequency of the generator frequency. The power pulses can be generated as a continuous train of pulses or as a separated pulse trains.

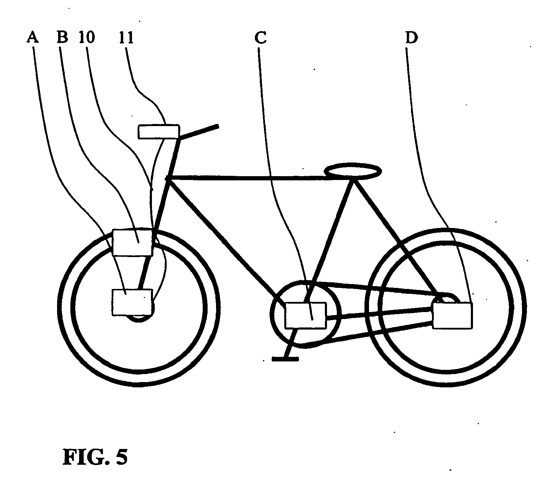

In FIG. 5 a schematic bicycle is depicted showing various possible placements A, B, C and D of the generator according to the invention. By means of example the placements may be as a tyre driven generator with a roller, as a wheel hub generator or a crank shaft generator with or without a suitable transmission ratio. The selection a transmission ratio will depend on the actual configuration of the generator, meaning that with a suitable number of coils and magnets there may only be a limited need or even not need for a transmission of the rotation to the input shaft of the generator. A suitable transmission for a wheel hub generator may be a planet gear. An electrical transmission wire 10 for supply of energy to a lamp 11 is depicted.

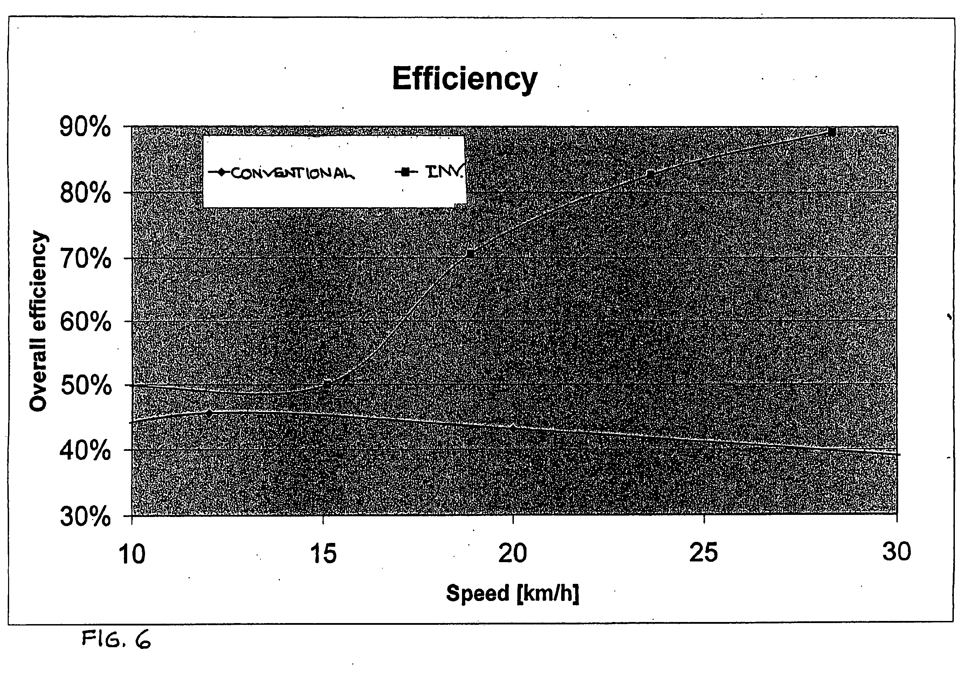

In FIG. 6 the efficiency of the generator according to the invention is depicted in comparison with a traditional commercially available hub mounted bicycle generator. At higher speed the difference between the two types of generators becomes evident and clearly illustrates that the generator according to the invention provides for a significant improvement in efficiency over the previously known technology in this field.

The generator is suited for powering bicycle lights, however, the generator may also be used for powering other electric devices, for example bicycle computers, and actuators for gear-shifting.

A generator for use in bicycles has been provided, said generator comprising;
a. one or more energisation sources with alternating magnetic field,
b. one or more coils,
c. one or more magnetically conductive pieces or magnetic material,
characterized in that the coil core is not filled by the magnetically conductive material.

A generator may be charactrised in that the coil core being filled with plastic or air. The generator for bicycles may be charactrised in that in having one coil per permanent magnet. The generator for bicycles may be charactrised in that in having more than one coil per permanent magnet. The generator for bicycles may be charactrised in having only 1 coil regardless of how many permanent magnets are working in the generator. The generator for bicycles may be characterized in having two coils regardless of how many magnets are working in the generator. The generator for bicycles may be characterised in that the coil being made as paths on a single-sided or multi-layered print, or the coil being wound by copper wire. The generator for bicycles may be characterized in the copper wire being a flat strip. The generator for bicycles may be characterized in at least one magnet being included in a rotating part that causes the alternating magnetic field through the coil. The generator may be characterized in at least 4 magnets being included in the part that causes the alternating magnetic field for the coil.

## Claims

1. A bicycle generator, the generator comprising a shaft (5) carrying a first disc (4) and a second disc (4), **characterised in that** the generator further comprises, at least one magnet mounted on the first disc adapted to rotate together with the shaft, a coil with a core of non-magnetic conducting material, where the second disc enables a magnetic field flow through the coil core from the at least one magnet on the first disc to the second disc, and where the coil is provided between the first and the second discs.

2. A bicycle generator according to claim 1, where the coil is provided between sets of magnets.

3. A bicycle generator according to claim 1 or 2 where four magnets or sets of magnets are provided.

4. A bicycle generator according to claim 1, 2 or 3, where the coil is wound over the shaft of the rotor.

5. A bicycle generator according to any of the claims 1-4, where a coil is provided for each magnet or set of magnets.

6. A bicycle generator according to any of the claims 1-5, where a housing is provided and where the magnets are mounted on radial extensions of a shaft mounted in said housing to allow rotation of the shaft in relation to the housing.

7. A bicycle generator according to claim 6, where the radial extension is a plate member where the magnets are mounted on said plate member.

8. A bicycle generator according to claim 6, where the core of the coil is constituted by parts of the housing.

9. A bicycle generator according to any of the claims 1-8, where an electric converter is provided in connection with the output of the generator for conversion of the generator power output.

10. A bicycle generator according to claim 9, where the electric converter is a switch mode converter.

11. A bicycle comprising a generator according to any of the claims 1-10.

12. A bicycle according to claim 11, where a transmission is provided between a rotating part of the bicycle and the generator shaft for increasing the generator rotational speed.

13. A bicycle according to claim 11 or 12, where a roller is provided on the shaft.

## Patentansprüche

1. Fahrradgenerator, wobei der Generator eine Welle (5) umfasst, die eine erste Scheibe (4) und eine zweite Scheibe (4) trägt, **dadurch gekennzeichnet, dass** der Generator weiterhin mindestens einen an der ersten Scheibe befestigten Magneten umfasst, der dazu beschaffen ist, zusammen mit der Welle zu rotieren, eine Spule mit einem Kern aus nicht magnetisch leitfähigem Material, wobei die zweite Scheibe den Fluss eines Magnetfelds durch den Spulenkern von dem mindestens einen Magneten an der ersten Scheibe zu der zweiten Scheibe ermöglicht, und wobei die Spule zwischen der ersten und der zweiten Scheibe vorgesehen ist.

2. Fahrradgenerator nach Anspruch 1, wobei die Spule zwischen Magnetsätzen vorgesehen ist.

3. Fahrradgenerator nach Anspruch 1 oder 2, wobei vier Magnete oder Magnetsätze vorgesehen sind.

4. Fahrradgenerator nach Anspruch 1, 2 oder 3, wobei die Spule über die Welle des Rotors gewickelt ist.

5. Fahrradgenerator nach einem der Ansprüche 1-4, wobei eine Spule für jeden Magneten oder jeden Magnetsatz vorgesehen ist.

6. Fahrradgenerator nach einem der Ansprüche 1-5, wobei ein Gehäuse vorgesehen ist und wobei die Magneten an radialen Verlängerungen einer im Gehäuse montierten Welle angebracht sind, um die Rotation der Welle in Bezug auf das Gehäuse zu ermöglichen.

7. Fahrradgenerator nach Anspruch 6, wobei die radiale Verlängerung ein Plattenelement ist, wobei die Magneten auf dem Plattenelement montiert sind.

8. Fahrradgenerator nach Anspruch 6, wobei der Kern der Spule aus Teilen des Gehäuses besteht.

9. Fahrradgenerator nach einem der Ansprüche 1-8, wobei ein elektrischer Wandler in Verbindung mit dem Ausgang des Generators zur Umwandlung der Ausgangsleistung des Generators bereitgestellt ist.

10. Fahrradgenerator nach Anspruch 9, wobei der elektrische Wandler ein getakteter Wandler ist.

11. Fahrrad, umfassend einen Generator nach einem der Ansprüche 1-10.

12. Fahrrad nach Anspruch 11, wobei zwischen einem rotierenden Teil des Fahrrads und der Generatorwelle ein Getriebe zu Erhöhung der Drehzahl des Generators bereitgestellt ist.

13. Fahrrad nach Anspruch 11 oder 12, wobei auf der Welle eine Walze vorgesehen ist.

## Revendications

1. Dynamo de bicyclette, la dynamo comprenant un axe (5) supportant une première disque (4) et une deuxième disque (4), **caractérisée en ce que** la dynamo comprend également au moins un aimant monté sur la première disque adapté pour tourner avec l'axe, une bobine possédant un noyau en matériau conducteur amagnétique, dans laquelle la deuxième disque permet le passage d'un champ magnétique au travers du noyau de la bobine depuis l'au moins un aimant sur la première disque vers la deuxième disque, et dans laquelle la bobine est située entre la première et la deuxième disque.

2. Dynamo de bicyclette selon la revendication 1, dans laquelle la bobine est située entre des jeux d'aimants.

3. Dynamo de bicyclette selon la revendication 1 ou 2, dans laquelle quatre aimants ou jeux d'aimants sont utilisés.

4. Dynamo de bicyclette selon la revendication 1, 2 ou 3, dans laquelle la bobine est enroulée autour de l'axe du rotor.

5. Dynamo de bicyclette selon l'une quelconque des revendications 1 à 4, dans laquelle une bobine est utilisée pour chaque aimant ou jeu d'aimants.

6. Dynamo de bicyclette selon l'une quelconque des revendications 1 à 5, dans laquelle un boîtier est utilisé et dans laquelle les aimants sont montés sur des extensions radiales d'un axe monté dans ledit boîtier pour permettre la rotation de l'axe par rapport au boîtier.

7. Dynamo de bicyclette selon la revendication 6, dans laquelle l'extension radiale est un élément de type plaque dans lequel les aimants sont montés sur ledit élément de type plaque.

8. Dynamo de bicyclette selon la revendication 6, dans laquelle le noyau de la bobine est constitué de parties du boîtier.

9. Dynamo de bicyclette selon l'une quelconque des revendications 1 à 8, dans laquelle un convertisseur électrique est utilisé au niveau de la sortie de la dynamo pour transformer la puissance produite par la dynamo.

10. Dynamo de bicyclette selon la revendication 9, dans laquelle le convertisseur électrique est un convertisseur à découpage.

11. Bicyclette comprenant une dynamo selon l'une quelconque des revendications 1 à 10.

12. Bicyclette selon la revendication 11, dans laquelle une transmission est utilisée entre une pièce rotative de la bicyclette et l'axe de la dynamo pour augmenter la vitesse de rotation de la dynamo.

13. Bicyclette selon la revendication 11 ou 12, dans laquelle un galet est utilisé sur l'axe.
